# EUROPÄISCHE PATENTSCHRIFT

(11) **EP 3 973 111 B1**
(45) Veröffentlichungstag und Bekanntmachung des Hinweises auf die Patenterteilung: **07.06.2023**
(21) Anmeldenummer: 20732810.5
(22) Anmeldetag: 09.06.2020
(51) Int. Cl.: E03C 1/298, F16K 15/14

(54) **SCHNABELVENTIL UND VERWENDUNG EINES SCHNABELVENTILS**
NOZZLE VALVE AND USE OF A NOZZLE VALVE
VALVE À BEC ET UTILISATION D'UNE VALVE À BEC

(30) Priorität: 13.06.2019 DE 202019103326 U
(43) Veröffentlichungstag der Anmeldung: 30.03.2022
(73) Patentinhaber: Neoperl GmbH, 79379 Müllheim (DE)
(72) Erfinder: HAUTH, Matthias, 79674 Todtnau/Muggenbrunn (DE)
(74) Vertreter: Mertzlufft-Paufler, Cornelius
(86) Internationale Anmeldenummer: PCT/EP2020/065991
(87) Internationale Veröffentlichungsnummer: WO 2020/249570

(56) Entgegenhaltungen:
- EP-A2- 2 439 349
- US-A- 2 662 724
- US-A- 3 047 013
- US-A- 3 504 699
- US-A- 5 010 925
- US-A1- 2003 009 079

## Beschreibung

Die Erfindung betrifft ein Schnabelventil, insbesondere zur Vermeidung eines Rückflusses eines Fluids, mit einem wenigstens teilweise elastischen Grundkörper, der einen schnabelförmigen Ausströmbereich aufweist, in welchem eine Schlitzöffnung ausgebildet ist, wobei eine Offenstellung des Schnabelventils durch eine Druckbeaufschlagung mit einer Flüssigkeit erfolgt und dabei das Fluid aus dem schnabelförmigen Ausströmbereich heraus strömt.

Derartige Schnabelventile werden beispielsweise für Rückflussverhinderer und/oder Injektoren eingesetzt, bei denen eine freie Wegstrecke gebildet ist, um einen Rückfluss einer Flüssigkeit, wie Wasser, zu verhindern. Die Schnabelventile können somit an einem Leitungsende angeordnet sein. Rückflussverhinderer und/oder Injektoren können zum Beispiel bei Dusch-WCs eingesetzt werden, um eine Kontamination des in einer Zuführleitung enthaltenen Wassers, insbesondere Trinkwassers, durch zurück in die Zuführleitung gelangtes verunreinigtes Wasser zu verhindern.

US 2,662,724 beschreibt ein solches einfaches Schnabelventil.

US 3,047,013 beschreibt ein Schnabelventil mit zwei senkrecht stehenden Öffnungsschlitzen, zur Verhinderung von Rückfluss in einer Toilette.

US 3,504,699 beschreibt ein Schnabelventil mit Verstärkungsrippen.

US 5,010,925 beschreibt eine Ventilanordnung mit einem Schnabelventil, das Flüssigkeit in einer Richtung durchlässt und in der Gegenrichtung ein Durchfluss verhindert.

US 2003/0009079 beschreibt einen Urinkatheter mit einem Ablassventil, das zum Öffnen manuell betätigt werden muss.

EP 2 439 349 A2 beschreibt eine Vorrichtung zur Verhinderung von unangenehmen Gerüchen an einem Abfluss. Die Vorrichtung weist einen schlauchförmigen Abschnitt auf, der einen Abflussbereich besitzt. An dem Abflussbereich sind Verstärkungsbänder angeordnet, die den Abflussbereich geschlossen halten, jedoch einen Durchfluss von Wasser in einer Richtung ermöglichen.

Schnabelventile weisen grundsätzlich jedoch häufig den Nachteil auf, dass die beispielsweise durch Dichtlippen ausgebildete Schlitzöffnung in Schließstellung des Schnabelventils nicht ordnungsgemäß verschlossen ist, sondern die Schlitzöffnung teilweise offensteht. Daher besteht die Gefahr, dass es zu einem Rückfluss von Schmutzwasser in die vom Schnabelventil verschlossene Leitung kommt.

Es besteht daher die Aufgabe, ein Schnabelventil eingangs genannter Art bereitzustellen, bei welchem im Vergleich zu vorbekannten Schnabelventilen ein besseres Verschließen des Schnabelventils in Schließstellung erreicht ist.

Die Lösung dieser Aufgabe wird erfindungsgemäß durch ein Schnabelventil mit den Merkmalen nach Anspruch 1 bereitgestellt.

Insbesondere wird zur Lösung der Aufgabe erfindungsgemäß ein Schnabelventil eingangs genannter Art vorgeschlagen, wobei dieses wenigstens eine quer zu einer Erstreckungsrichtung der Schlitzöffnung verlaufende Materialverdickung aufweist. Durch die Materialverdickung ist es möglich, dass eine quer zur Erstreckungsrichtung der Schlitzöffnung wirkende Kraft auf die Dichtlippen wirkt und diese in Schließstellung des Schnabelventils vollständig geschlossen sind. Dies hat den Vorteil, dass ein Rückfluss eines Fluids in eine durch das erfindungsgemäße Schnabelventil abgeschlossene Leitung besser verhindert werden kann, so dass es nicht zu einer Kontamination von in der Leitung enthaltenen Fluids kommt.

Eine weitere, insbesondere unabhängige Lösung der zuvor genannten Aufgabe kann durch ein Schnabelventil mit den Merkmalen nach Anspruch 2 erreicht werden.

Insbesondere wird zur Lösung der Aufgabe erfindungsgemäß ein Schnabelventil eingangs genannter Art vorgeschlagen, wobei das Schnabelventil ein Aufnahmeteil zur Aufnahme des Grundkörpers aufweist, wobei eine Innenkontur eines Aufnahmeraums des Aufnahmeteils eine erste Form aufweist und eine Außenkontur des Grundkörpers eine von der ersten Form abweichende zweite Form aufweist. Insbesondere kann der im Aufnahmeraum eingesetzte Grundkörper in Schließstellung im Aufnahmeraum quer, vorzugsweise senkrecht, zur Erstreckungsrichtung der Schlitzöffnung wenigstens teilweise komprimiert sein. Alternativ oder ergänzend dazu kann die zweite Form im entspannten Zustand des Grundkörpers quer zur Erstreckungsrichtung über die erste Form überstehen. Diese Ausgestaltungen haben den Vorteil, dass aufgrund der Unterschiede in der Form des Grundkörpers und der Form des Aufnahmeraums des Aufnahmeteils eine Druckkraft, die quer, insbesondere senkrecht, zur Erstreckungsrichtung der Schlitzöffnung wirkt, in Schließstellung des Schnabelventils auf wenigstens einen Randbereich der Schlitzöffnung, insbesondere auf wenigstens eine Dichtlippe, wirkt.

Der Grundkörper ist also in Gebrauchsstellung in den Aufnahmeraum des Aufnahmeteils eingesetzt.

Die zuvor in Bezug auf die unterschiedlichen Ausführungsvarianten beschriebenen Merkmale können jedoch auch miteinander zu einer vorteilhaften Weiterbildung kombiniert werden.

Nachfolgend werden zudem weitere, vorteilhafte Ausgestaltungen der Erfindung beschrieben, die allein oder in Kombination mit den Merkmalen anderer Ausgestaltungen optional zusammen mit den Merkmalen nach Anspruch 1 und/oder mit den Merkmalen nach Anspruch 2 kombiniert werden können.

Gemäß einer Weiterbildung kann die Schlitzöffnung im schnabelförmigen Ausströmbereich durch wenigstens zwei Dichtlippen ausgebildet sein. Durch die Dichtlippen kann ein besonders einfach ausgebildetes Schnabelventil mit guten Abdichtungseigenschaften ausgebildet werden. Insbesondere kann dabei weiter vorgesehen sein, dass eine Materialverdickung, beispielsweise die bereits zuvor genannte Materialverdickung, an wenigstens eine der zwei Dichtlippen oder an beide Dichtlippen ansetzt. Somit kann eine Druckkraft von der wenigstens einen Materialverdickung nahezu ohne Kraftverlust auf die Dichtlippe/n übertragen werden.

Gemäß einer vorteilhaften Weiterbildung kann die wenigstens eine Materialverdickung als wenigstens eine Verstärkungsrippe ausgebildet sein. Somit ist es möglich, noch besser eine quer zu einer Erstreckungsrichtung der Dichtlippen wirkende Drucckraft auf wenigstens eine der Dichtlippen in Schließstellung des Schnabelventils zu erzeugen, um die Schlitzöffnung vollständig zu verschließen.

Gemäß einer weiteren vorteilhaften Weiterbildung kann in Schließstellung des Schnabelventils ein Aneinanderdrücken der Dichtlippen quer zur Erstreckungsrichtung der Schlitzöffnung erfolgen, so dass die Dichtlippen, insbesondere vollständig, aneinander anliegen oder so dass sich die Dichtlippen aneinander annähern. Beispielsweise kann dies dadurch erreicht werden, dass es zu einer Deformation der zweiten Form beim Einsetzten in die erste Form kommt. Vorzugsweise kann ein Zusammendrücken der Dichtlippen senkrecht zur Erstreckungsrichtung der Schlitzöffnung erfolgen. Dadurch ist ohne eine grundlegende Umkonstruktion bekannter Schnabelventile ein dichtes Verschließen des Schnabelventils zu erreichen.

Um eine noch bessere Kraftübertragung auf wenigstens eine der Dichtlippen in Schließstellung des Schnabelventils einzurichten, kann die wenigstens eine Materialverdickung von einer Außenkontur des Grundkörpers bis zu einem Rand der Schlitzöffnung verlaufen. Der Rand der Schlitzöffnung kann beispielsweise zumindest teilweise durch eine Dichtlippe oder beide Dichtlippen der wenigstens zwei Dichtlippen ausgebildet sein. Somit kann beispielsweise durch Aufbringen einer Druckkraft auf eine Außenkontur des Grundkörpers ein sicheres Verschließen des Schnabelventils in Schließstellung erreicht werden, da die Dichtlippen gegeneinandergedrückt werden oder zumindest eine Dichtlippe gegen die weitere Dichtlippe gepresst ist.

Gemäß einer weiteren vorteilhaften Ausgestaltung des Schnabelventils kann die wenigstens eine Materialverdickung an einer Innenseite (Zuströmseite) des Grundkörpers ausgebildet sein. Alternativ oder ergänzend dazu kann die wenigstens eine Materialverdickung an einer Außenseite (Abströmseite) des Grundkörpers ausgebildet sein. Insbesondere kann der Grundkörper mehrere Materialverdickungen aufweisen, die an der Innenseite und/oder der Außenseite des Grundkörpers ausgebildet sein können. Die Begriffe Innenseite und Außenseite des Grundkörpers können sich auf eine Einbausituation des Schnabelventils beziehen, wobei die Innenseite als die Seite bezeichnet werden kann, die im eingebauten Zustand durch Fluid in einer Leitung, die durch das Schnabelventil abgeschlossen ist, beaufschlagt ist. Entsprechend dazu kann als Außenseite die Seite des Grundkörpers bezeichnet werden, auf welcher der schnabelförmige Ausströmbereich ausgebildet ist, aus welchem Fluid in Offenstellung ausströmt.

Um eine besonders gute Kraftübertragung über die wenigstens eine Materialverdickung auf die die Schlitzöffnung ausbildenden Dichtlippen erreichen zu können, kann die wenigstens eine Materialverdickung durchgängig, also unterbrechungsfrei, von der Außenkontur bis zu einem Rand der Schlitzöffnung verlaufen. Durch eine unterbrechungsfreie Ausbildung der Materialverdickung kann somit ein auf eine Außenkontur des Grundkörpers aufgebrachte Druckkraft nahezu optimal auf wenigstens eine der Dichtlippen übertragen werden, so dass die beiden Dichtlippen dicht, insbesondere luftdicht und/oder flüssigkeitsdicht, aneinander anliegen.

Gemäß einer besonders vorteilhaften Ausgestaltung des Schnabelventils kann es vorgesehen sein, dass die erste Form der Innenkontur des Aufnahmeraums rund und die zweite Form der Außenkontur des Grundkörpers unrund ausgebildet ist. Alternativ oder ergänzend dazu kann die erste Form der Innenkontur des Aufnahmeraums unrund und die zweite Form der Außenkontur des Aufnahmeraums rund ausgebildet sein. Als unrunde Form kann beispielsweise eine ovale Form gelten. Es sind aber auch andere Formen möglich, die von einer runden Form, insbesondere kreisrunden Form, abweichen. Allgemein kann gesagt werden, dass es vorteilhaft ist, wenn die beiden Formen des Grundkörpers und des Aufnahmeraums derart ausgestaltet sind, dass es durch das Einsetzen des Grundkörpers in den Aufnahmeraum zu einer lokalen, vorzugsweise ausschließlich lokalen und/oder somit ungleichmäßigen, Komprimierung des Grundkörpers kommt, woraus eine Druckkraft resultiert, die wiederum quer zu der Erstreckungsrichtung der Schlitzöffnung auf eine Dichtlippe oder die Dichtlippen wirkt.

Besonders vorteilhaft kann es dabei sein, wenn eine Abmessung der zweiten Form quer zur Erstreckungsrichtung der Schlitzöffnung größer als eine korrespondierende Abmessung der ersten Form gewählt ist.

Das Aufnahmeteil kann beispielsweise eine runde, insbesondere kreisrunde, Außenkontur aufweisen, so dass es dazu geeignet ist, in eine Leitung mit rundem, insbesondere kreisrundem, Querschnitt eingesetzt zu werden.

Um eine gute Sicherung des Grundkörpers am Aufnahmeteil einrichten zu können, so dass sich der Grundkörper im eingebauten Zustand nicht vom Aufnahmeteil löst, kann ein Aufnahmeraum, beispielsweise der bereits zuvor genannte Aufnahmeraum, ein durchgehendes Aufnahmeloch mit einer Verengung aufweisen, wobei der Grundkörper im eingesetzten Zustand an der Verengung gehalten ist. Die Verengung kann dabei zum Beispiel durch eine Stufe, insbesondere eine Verringerung des Durchmessers des Aufnahmelochs, ausgebildet sein. Durch die Verengung kann somit ein Anschlag ausgebildet sein, an welchem der Grundkörper anliegt und gegen welchen er bei einer Druckbeaufschlagung an der Innenseite des Grundkörpers gedrückt ist. Der Aufnahmeraum kann somit zwei Öffnungen, insbesondere mit unterschiedlich großen Öffnungsquerschnitten, aufweisen, die an abgewandten Seiten des Aufnahmeteils liegen.

Um ein möglichst einfaches Öffnen und Verschließen des Schnabelventils erreichen zu können, kann der Grundkörper, insbesondere vollständig, aus einem elastischen Material hergestellt sein. Beispielsweise kann der Grundkörper aus einem Gummiwerkstoff hergestellt sein. Um eine möglichst gute, insbesondere lokal wirkende, Komprimierung des Grundkörpers im in den Aufnahmeraum des Aufnahmeteils eingesetzten Zustand erreichen zu können, kann das Aufnahmeteil steif ausgebildet sein.

Damit eine noch bessere Kraftübertragung quer zu einer Erstreckungsrichtung der Schlitzöffnung auf eine Dichtlippe oder beide Dichtlippen möglich ist, kann es gemäß einer vorteilhaften Weiterbildung vorgesehen sein, dass am Grundkörper wenigstens zwei Materialverdickungen ausgebildet sind, welche jeweils quer, insbesondere senkrecht, zur Erstreckungsrichtung der Schlitzöffnung angeordnet sind. Insbesondere können die wenigstens zwei Materialverdickungen auf gegenüberliegenden Seiten der Schlitzöffnung und/oder an unterschiedlichen Dichtlippen anliegen und/oder enden. Dies hat den Vorteil, dass eine Kraftübertragung quer zu einer Erstreckungsrichtung der Schlitzöffnung an mehreren Kraftübertragungsstellen auf wenigstens eine der Dichtlippen möglich ist. Damit kann die Schlitzöffnung in Schließstellung noch sicherer verschlossen werden, um einen Rückfluss beispielsweise von Schmutzwasser in eine mit dem Schnabelventil abgeschlossene Leitung zu verhindern.

Besonders vorteilhaft kann es dabei sein, wenn die wenigstens zwei Materialverdickungen von der Außenkontur des Grundkörpers jeweils bis an gegenüberliegende Ränder der Schlitzöffnung verlaufen. Alternativ oder ergänzend dazu kann es gemäß einer weiteren vorteilhaften Ausgestaltung vorgesehen sein, dass die wenigstens zwei Materialverdickungen durch die Schlitzöffnung voneinander getrennt sind. Vorzugsweise können die Ränder der Schlitzöffnung, wie bereits zuvor erläutert wurde, durch die zwei Dichtlippen ausgebildet sein. Somit kann es beispielsweise vorgesehen sein, dass die Schlitzöffnung beidseitig durch jeweils mindestens eine Materialverdickung flankiert ist. Dies hat den Vorteil, dass eine Ausübung einer Druckkraft auf beide Dichtlippen, insbesondere aus unterschiedlichen Richtungen und/oder über wenigstens zwei Kraftübertragungsstellen, möglich ist, so dass die beiden Dichtlippen in Schließstellung des Schnabelventils jeweils quer, insbesondere senkrecht, zu einer Erstreckungsrichtung der Schlitzöffnung noch stärker gegeneinandergedrückt werden können. Somit kann die Schlitzöffnung des Schnabelventils beispielsweise auch bei einer Beaufschlagung mit höheren Drücken in Schließstellung vollständig geschlossen werden, so dass es auch hier nicht zu einem Rückfluss kommt.

Gemäß einer weiteren vorteilhaften Weiterbildung, deren Merkmale alternativ oder ergänzend zu den Merkmalen der zuvor genannten Ausgestaltungen vorgesehen sein können, können die wenigstens zwei Materialverdickungen in Erstreckungsrichtung der Schlitzöffnung im selben Abstand zur Außenkontur des Grundkörpers angeordnet sein. Insbesondere können die wenigstens zwei Materialverdickungen in Erstreckungsrichtung der Schlitzöffnung fluchtend angeordnet sein. Alternativ oder ergänzend dazu können die wenigstens zwei Materialverdickungen in Erstreckungsrichtung der Schlitzöffnung versetzt zueinander angeordnet sein. Diese Anordnungen weisen den Vorteil auf, dass eine noch bessere Übertragung einer Druckkraft auf wenigstens eine der beiden Dichtlippen möglich ist.

Die oben genannte Aufgabe wird zudem durch eine Verwendung eines Schnabelventils, wie es hierin beschrieben und beansprucht ist, zur Vermeidung eines Rückflusses eines Fluids gelöst, wobei in Schließstellung des Schnabelventils ein Zusammendrücken der Dichtlippen quer zur Erstreckungsrichtung der Schlitzöffnung erfolgt. Somit kann besonders gut verhindert werden, dass es zu einem Eindringen eines Fluids aus einem in Strömungsrichtung eines Fluids dem Schnabelventil nachgelagerten Bereichs in einen durch das Schnabelventil abgeschlossenen Bereich kommt. Insbesondere kann es somit nicht zu einem Rückfluss von Schmutzwasser in eine Leitung, die durch das Schnabelventil abgeschlossen ist, kommen.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:

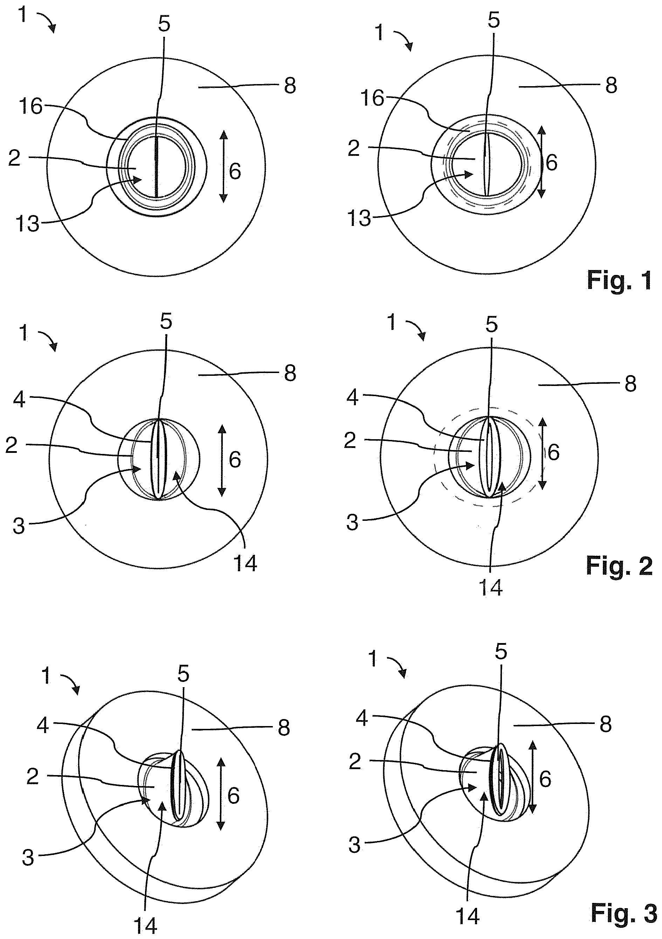

- Fig. 1: zwei Rückansichten auf eine Unterseite einer ersten Ausführungsvariante eines erfindungsgemäßen Schna-belventils, welches einen Grundkörper mit einer un-runden, insbesondere ovalen, Form aufweist, der in Gebrauchsstellung in einen an einem Aufnahmeteil ausgebildeten Aufnahmeraum mit einer runden Querschnittsform eingesetzt ist, wobei rechts eine undeformierte Stellung im nicht eingebauten Zustand und links eine deformierte Stellung im eingebauten Zustand gezeigt ist, wobei die Dichtlippen in verbautem Zustand aneinander anliegen und die Schlitzöffnung verschließen und in unverbautem Zustand wenigstens teilweise auseinander stehen, so dass die Schlitzöffnung wenigstens teilweise offen ist,
- Fig. 2: zwei Draufsichten auf eine Oberseite der ersten Ausführungsvariante eines erfindungsgemäßen Schnabelventils aus Fig. 1, wobei rechts erneut eine undeformierte Stellung im nicht eingebauten Zustand und links eine deformierte Stellung im eingebauten Zustand gezeigt ist, wobei mit der gestrichelten Linie die Außenkontur des Grundkörpers angedeutet ist,
- Fig. 3: zwei räumliche Ansichten der ersten Ausführungsvariante eines erfindungsgemäßen Schnabelventils aus den Fig. 1 und 2, wobei rechts erneut eine undeformierte Stellung im nicht eingebauten Zustand und links eine deformierte Stellung im eingebauten Zustand gezeigt ist,
- Fig. 4: zwei Rückansichten des Aufnahmeteils der in den Fig. 1-3 gezeigten ersten Ausführungsvariante, wobei zwischen den Darstellungen kein Unterschied vorliegt, da das Aufnahmeteil in "verbautem und unverbautem Zustand unverändert bleibt,
- Fig. 5: zwei hypothetische Rückansichten auf eine Innenseite des Grundkörpers in Gebrauchsstellung, wobei rechts eine undeformierte Stellung im nicht eingebauten Zustand und links eine deformierte Stellung im eingebauten Zustand gezeigt ist,
- Fig. 6: eine Explosionsdarstellung der ersten Ausführungsvariante eines erfindungsgemäßen Schnabelventils,
- Fig. 7: eine Draufsicht auf eine Außenseite eines Grundkörpers und eine dreidimensionale Darstellung eines Grundkörpers mit offener Schlitzöffnung in unverbautem Zustand,
- Fig. 8: eine Draufsicht auf eine Außenseite des Grundkörpers und eine dreidimensionale Darstellung des Grundkörpers aus Fig. 7 mit geschlossener Schlitzöffnung in verbautem Zustand,

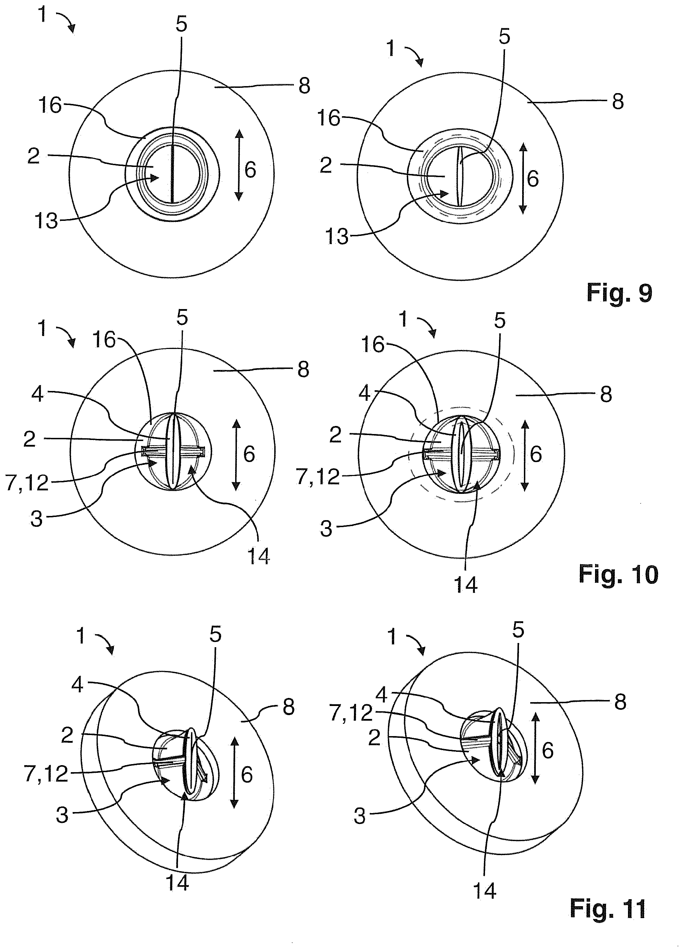

- Fig. 9: zwei Rückansichten auf eine Unterseite einer zweiten Ausführungsvariante eines erfindungsgemäßen Schnabelventils, welches einen Grundkörper mit zwei, sich quer zu einer Erstreckungsrichtung der Schlitzöffnung erstreckenden Materialverdickungen aufweist, wobei der Grundkörper in Gebrauchsstellung in einen an einem Aufnahmeteil ausgebildeten Aufnahmeraum eingesetzt ist, wobei rechts eine undeformierte Stellung im nicht eingebauten Zustand und links eine deformierte Stellung im eingebauten Zustand gezeigt ist, wobei die Dichtlippen in eingebautem Zustand aneinander anliegen und die Schlitzöffnung verschließen und in unverbautem Zustand wenigstens teilweise auseinander stehen, so dass die Schlitzöffnung offen ist,
- Fig. 10: zwei Draufsichten auf eine Oberseite der zweiten Ausführungsvariante eines erfindungsgemäßen Schnabelventils aus Fig. 9, wobei rechts erneut eine undeformierte Stellung im nicht eingebauten Zustand und links eine deformierte Stellung im eingebauten Zustand gezeigt ist, wobei mit der gestrichelten Linie die Außenkontur des Grundkörpers angedeutet ist,
- Fig. 11: zwei räumliche Ansichten der zweiten Ausführungsvariante eines erfindungsgemäßen Schnabelventils aus den Fig. 9 und 10, wobei rechts erneut eine undeformierte Stellung im nicht eingebauten Zustand und links eine deformierte Stellung im eingebauten Zustand gezeigt ist,
- Fig. 12: zwei Rückansichten auf eine Innenseite des Grundkörpers eines erfindungsgemäßen Schnabelventils aus den Fig. 9 bis 11, wobei links eine undeformierte Stellung im nicht eingebauten Zustand und rechts eine deformierte Stellung im eingebauten Zustand gezeigt ist,
- Fig. 13: eine Außenseite des Grundkörpers der zweiten Ausführungsvariante eines erfindungsgemäßen Schnabelventils aus den Fig. 9 bis 11, wobei links erneut eine undeformierte Stellung im nicht eingebauten Zustand und rechts eine deformierte Stellung im eingebauten Zustand gezeigt ist,
- Fig. 14: eine Explosionsdarstellung der zweiten Ausführungsvariante eines erfindungsgemäßen Schnabelventils,
- Fig. 15: eine dreidimensionale Darstellung des Grundkörpers aus Fig. 12 und 13 in unverbautem Zustand,
- Fig. 16: eine dreidimensionale Darstellung des Grundkörpers aus Fig. 12 und 13 in verbautem Zustand.

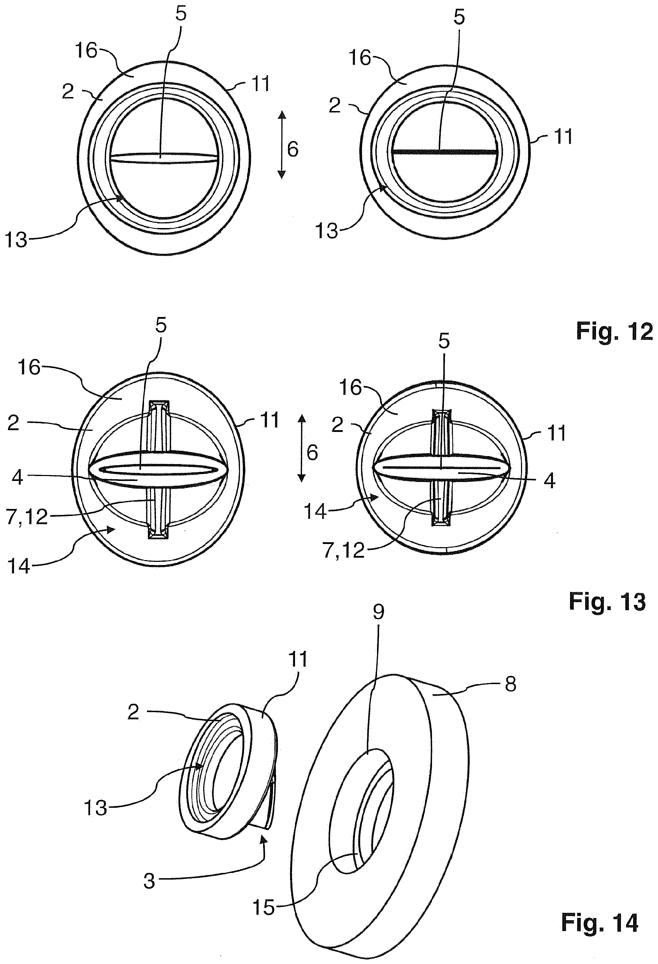

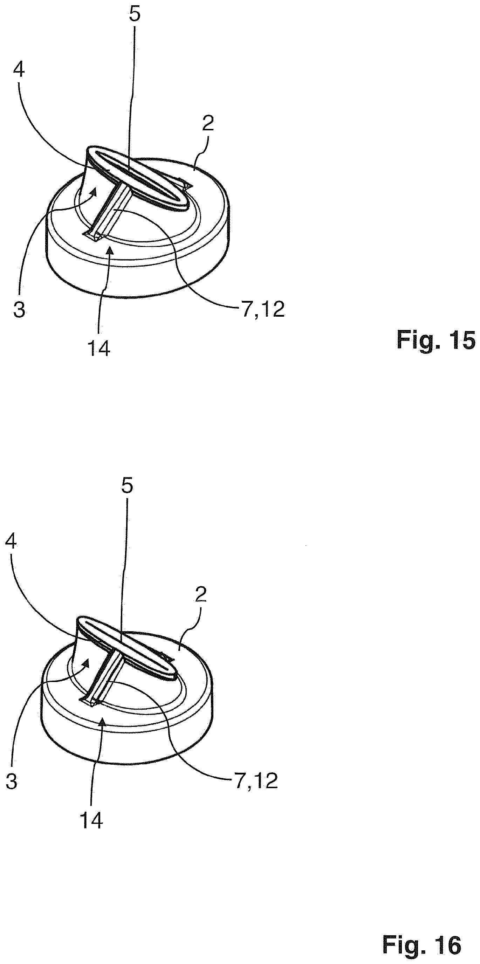

In den Figuren 1-16 sind zwei Ausführungsvarianten eines erfindungsgemäßen Schnabelventils dargestellt, wobei die beiden Schnabelventile im Ganzen jeweils als 1 bezeichnet sind.

Auf der linken Seite ist in den Figuren 1, 2, 3, 5, 9, 10 und 11 jeweils ein verbauter Zustand des Schnabelventils 1 und auf der rechten Seite ein unverbauter Zustand es Schnabelventils 1 dargestellt.

Die Schnabelventile 1 können jeweils dazu eingesetzt sein, um einen Rückfluss eines Fluids, wie beispielsweise einer Flüssigkeit, in eine durch das Schnabelventil 1 abgeschlossene Leitung zu verhindern.

Die beiden Schnabelventile 1 weisen jeweils einen Grundkörper 2 auf, der wenigstens im Bereich eines schnabelförmigen Ausströmbereichs 3 elastisch ausgebildet ist. Während einer Offenstellung des Schnabelventils 1, beispielsweise bei einer Druckbeaufschlagung mit einer Flüssigkeit, strömt das Fluid aus dem schnabelförmigen Ausströmbereich 3 heraus, insbesondere ausschließlich aus dem schnabelförmigen Ausströmbereich 3 heraus.

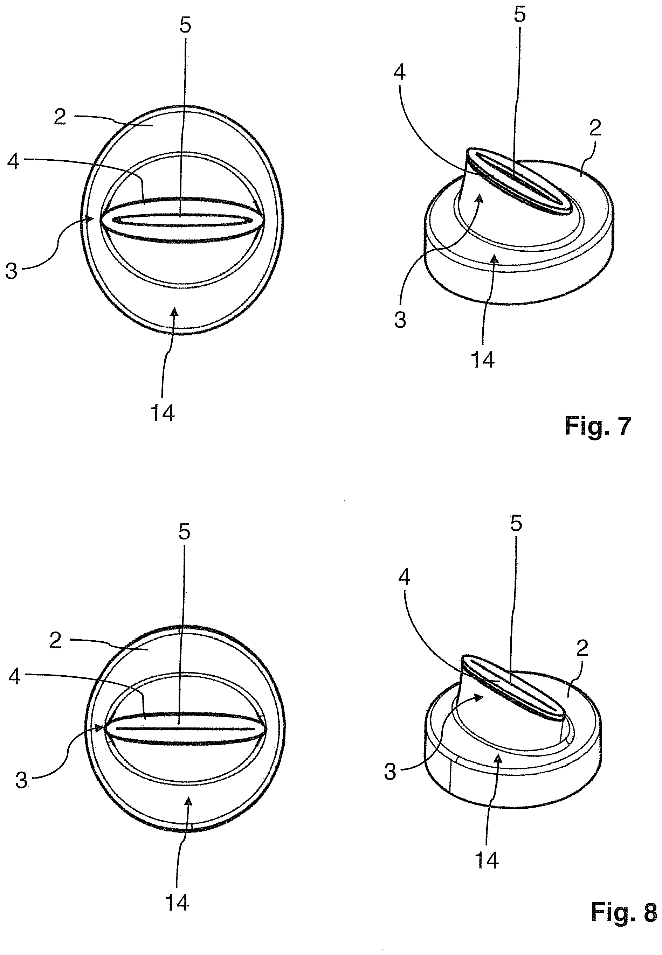

Der Grundkörper 2 weist eine in den Figuren 1 und 7 gezeigte Innenseite 13 und eine in den Figuren 2 und 8 gezeigte Außenseite 14 auf. Die Begriffe Innenseite 13 und Außenseite 14 des Grundkörpers 2 können sich auf eine Einbausituation des Schnabelventils 1 beziehen, wobei die Innenseite 13 als die Seite bezeichnet werden kann, die im eingebauten Zustand durch Fluid beaufschlagt ist (Zuströmseite). Entsprechend dazu kann als Außenseite die Seite des Grundkörpers 2 bezeichnet werden, auf welcher der Ausströmbereich 3 liegt (Abströmseite).

Der Ausströmbereich 3 weist wenigstens zwei verformbare Dichtlippen 4 auf, zwischen welchen eine Schlitzöffnung 5 ausgebildet ist. In einer offenen Stellung der Schlitzöffnung 5 kann ein Fluid aus dem Schnabelventil 1 austreten, da die wenigstens zwei Dichtlippen 4 zumindest teilweise auseinander stehen. In Schließstellung der Schlitzöffnung 5 liegen die wenigstens zwei Dichtlippen 4 im Gegensatz dazu aneinander an, so dass die Schlitzöffnung 5 verschlossen ist.

Bei vorbekannten Schnabelventilen besteht häufig das Problem, dass die Schlitzöffnung selbst bei einer Schließstellung nicht dicht verschlossen ist, so dass in Schließstellung über die Schlitzöffnung ein Rückfluss möglich ist. Dies kann zur Folge haben, dass es zu einer Kontamination eines Inhaltes einer in Strömungsrichtung dem Schnabelventil 1 vorgeschalteten Leitung und/oder einer durch das Schnabelventil abgeschlossenen Leitung kommt, indem z.B. Schmutzwasser durch die nur unzureichend verschlossene Schlitzöffnung hindurchtritt.

Hier setzt die Erfindung an und stellt eine Lösung für das genannte Problem bereit.

Bei den in den Figuren 9-16 gezeigten Ausführungsvariante des Schnabelventils 1 bzw. des Grundkörpers 2 ist eine Materialverdickung 7 ausgebildet, die sich quer zu einer Erstreckungsrichtung 6 der Schlitzöffnung 5 und/oder quer zur Erstreckungsrichtung der Dichtlippen 4 erstreckt. Durch die Materialverdickung 7 ist es möglich, dass eine Druckkraft auf wenigstens eine der Dichtlippen 4 zumindest in Schließstellung des Schnabelventils 1 erfolgt, so dass die Dichtlippen 4 quer zur Erstreckungsrichtung 6 zusammengepresst sind. Durch die Materialverdickung 7 kann somit beispielsweise eine gewünschte Vorspannung definiert sein, aus welcher die besagte Druckkraft resultiert. Die Materialverdickung 7 weist somit die Funktion eines Rückstellelements auf, um die Dichtlippen 4 in eine Schließstellung zu bewegen. Die Materialverdickungen 7 können daher auch direkt an die Dichtlippen 4 ansetzen, so dass eine möglichst verlustfreie Kraftübertragung möglich ist.

Die wenigstens eine Materialverdickung 7 ist bei der gezeigten Ausführungsvariante an der Außenseite 14 des Grundkörpers 2, insbesondere als Teil des Grundkörpers 2, ausgebildet. Es ist jedoch auch denkbar, dass die Materialverdickung/en 7 an der Innenseite 13 ausgebildet ist/sind.

Bei der in den Figuren 1bis 8 gezeigten Ausführungsvariante des Schnabelventils 1 bzw. des Grundkörpers 2 ist ein Aufnahmeteil 8 zur Aufnahme des Grundkörpers 2 vorgesehen, wobei eine Innenkontur 9 und/oder eine Querschnittsform eines durch das Aufnahmeteil 8 ausgebildeten Aufnahmeraums 10 eine erste Form aufweist und eine Außenkontur 11 und/oder eine Querschnittsform des Grundkörpers 2 eine von der ersten Form abweichende zweite Form aufweist. Eine Abmessung der zweiten Form ist derart gewählt, dass sie quer zur Erstreckungsrichtung 6 der Schlitzöffnung 5 größer als eine korrespondierende Abmessung der ersten Form ist. In entspanntem Zustand des Grundkörpers 2 steht die zweite Form des Grundkörpers 2 quer zur Erstreckungsrichtung 6 über die erste Form der Innenkontur 9 des Aufnahmeraums 10 über.

Der Grundkörper 2 ist in Gebrauchsstellung in den Aufnahmeraum 10 eingesetzt. Zumindest in Schließstellung ist der in den Aufnahmeraum 10 eingesetzte und durch eine den Aufnahmeraum 10 ausbildende Wandung zumindest teilweise beaufschlagte Grundkörper 2 aufgrund der Beaufschlagung durch die Wandung wenigstens teilweise komprimiert. Durch die wenigstens teilweise Kompression des Grundkörpers 2 kann eine auf eine Dichtlippe 4 oder die Dichtlippen 4 wirkende Druckkraft entwickelt werden, die quer, vorzugsweise senkrecht, zur Erstreckungsrichtung 6 der Schlitzöffnung 5 wirkt. Damit löst die in den Figuren 1-3 gezeigten Ausführungsvariante das gleiche Problem, wie die in den Figuren 9-11 gezeigte Ausführungsvariante des Schnabelventils 1, nur dass dabei andere technische Mittel als Lösung eingesetzt werden.

Es ist jedoch auch denkbar, dass die technischen Merkmale der beiden zuvor beschriebenen Ausführungsvarianten miteinander kombiniert werden. Aus diesem Grund können die weiteren, nachfolgend beschriebenen Merkmale der Schnabelventile 1 beliebig miteinander zu wenigstens einer weiteren Ausführungsvariante des Schnabelventils 1 kombiniert werden.

Wie in den Figuren 10, 11, 13, 15 und 16 gezeigt ist, kann die wenigstens eine Materialverdickung 7 als wenigstens eine Verstärkungsrippe 12 ausgebildet sein. Die gezeigte Ausführungsvariante weist hier zwei, jeweils als Verstärkungsrippen 12 ausgebildete Materialverdickungen 7 auf. Die Anzahl der Materialverdickungen 7 kann jedoch auch mehr als zwei betragen.

In Schließstellung liegen die beiden Dichtlippen 4 dicht aneinander an, so dass die Schlitzöffnung 5 verschlossen ist. Dabei sind die beiden Dichtlippen 4 aufgrund der Materialverdickung 7 und/oder aufgrund der durch die Formunterschiede zwischen Grundkörper 2 und Aufnahmeraum 10 auftretenden, wenigstens quer, vorzugsweise senkrecht, zur Erstreckungsrichtung 6 der Schlitzöffnung 5 wirkenden Kompression des Grundkörpers 2 quer, vorzugsweise senkrecht, zur Erstreckungsrichtung 6 der Schlitzöffnung 5 aneinandergepresst.

Die beiden jeweils als Verstärkungsrippen 12 ausgestalteten Materialverdickungen 7 verlaufen von einer Außenkontur 11 des Grundkörpers 2 bis zu einem Rand der Schlitzöffnung 5, beispielsweise bis zu einem Rand der Dichtlippen 4. Vorzugsweise können die beiden Materialverdickungen 7 jeweils etwa in der Mitte der Schlitzöffnung 5 angreifen, um ein optimales Verschließen zu ermöglichen.

Ein Rand oder die Ränder der Schlitzöffnung 5 kann/können beispielsweise durch eine Dichtlippe 4 oder die wenigstens zwei Dichtlippen 4 ausgebildet sein.

Wie in den Figuren 10 und 11 gezeigt ist, können die Materialverdickungen 7 ohne Unterbrechungen, also durchgängig ausgebildet sein.

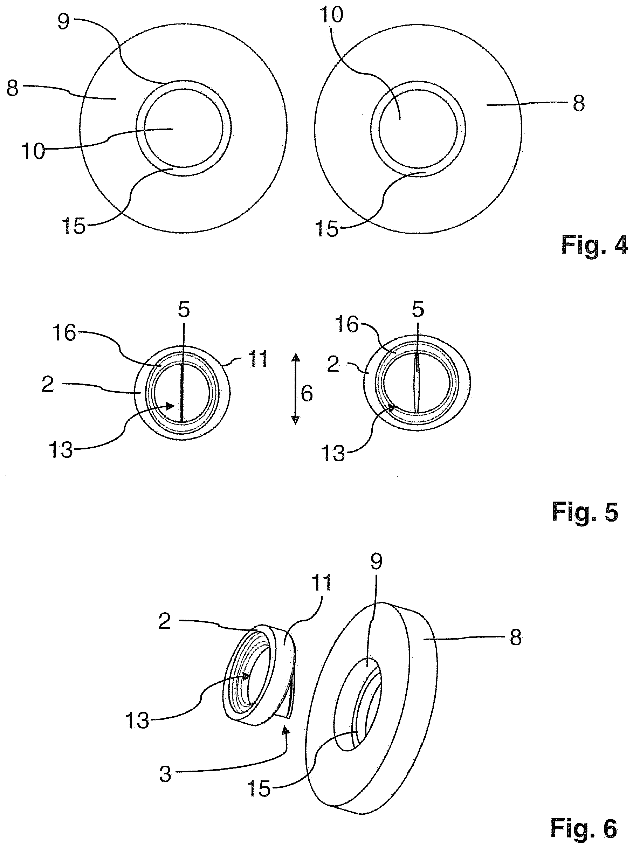

Wie in den Figuren 5, 12 und 13 besonders gut zu erkennen ist, kann der Grundkörper 2 eine unrunde Form, insbesondere eine unrunde Außenkontur 11, aufweisen, wobei der Aufnahmeraum 10 des Aufnahmeteils 8 eine runde Form, insbesondere eine runde Querschnittsform, aufweist. Somit ist der Grundkörper 2 im in den Aufnahmeraum 10 eingesetzten Zustand derart zusammengedrückt, dass eine Druckkraft quer zu der Erstreckungsrichtung 6 wirkt.

Es sind jedoch auch andere Formen denkbar, wobei allgemein gesagt werden kann, dass eine Formabweichung und/oder Größenabweichung zwischen dem Grundkörper 2 und dem Aufnahmeraum 10 vorliegen kann, um die Schlitzöffnung 5 durch eine daraus resultierende Kompression des Grundkörpers 2 in Schließstellung des Schnabelventils 1 besser zu verschließen.

Der Aufnahmeraum 10 des Aufnahmeteils 8 ist durch ein durchgehendes Aufnahmeloch ausgebildet, dass eine Verengung 15 aufweist, durch welche eine Anschlagsfläche ausgebildet ist, an der der Grundkörper 2 mit einer dazu korrespondierenden Gegenanschlagfläche im eingesetzten Zustand anliegt. Durch die Verengung 15 wird der Grundkörper 2 somit in Gebrauchsstellung am Aufnahmeteil 8 festgehalten.

Der Grundkörper 2 ist vorzugsweise vollständig aus einem elastischen Material, wie beispielsweise einem Gummiwerkstoff, hergestellt. Dies hat den Vorteil, dass eine Öffnung des Schnabelventils 1 durch eine Formveränderung des Ausströmbereich 3 erfolgen kann. Insbesondere kann es sich bei dem elastischen Material also somit um ein reversibel verformbares Material handeln, so dass sich dieses von selbst in seine Ausgangsform zurück verformt.

Das Aufnahmeteil 8 kann hingegen aus einem steifen Material, insbesondere nicht verformbaren Material, hergestellt sein. Somit kann der Grundkörper 2 besser durch eine Beaufschlagung mit dem Aufnahmeteil 8 verformt und/oder komprimiert werden.

Die beiden Materialverdickungen 7 sind bei der in den Figuren 9-16 gezeigten Ausführungsvariante auf beiden Seiten der Schlitzöffnung 5 ausgebildet. Dabei verlaufen die Materialverdickungen 7 jeweils von der Außenkontur 11 des Grundkörpers 2 bis hin zu einem Rand der Schlitzöffnung 5, insbesondere bis hin zu einem Rand jeweils einer Dichtlippe 4. Die beiden Materialverdickungen 7 sind daher durch die Schlitzöffnung 5 voneinander getrennt.

In Erstreckungsrichtung 6 der Schlitzöffnung 5 und/oder der Dichtlippen 4 sind die Materialverdickungen 7 dabei in gleichem Abstand zur Außenkontur des Grundkörpers 2 und/oder mit identischer Länge ausgebildet.

Vorzugsweise kann der Grundkörper 2 symmetrisch, insbesondere spiegelsymmetrisch, ausgebildet sein. Dies hat den Vorteil, dass ein möglichst gleichmäßiges Auslaufstrahlbild erzeugt werden kann.

Die beiden Materialverdickungen 7 sind in Erstreckungsrichtung 6 zueinander fluchtend angeordnet, so dass sie an sich gegenüberliegenden Kraftübertragungsstellen der Dichtlippen 4 ansetzen.

Der Grundkörper 2 kann weiter einen in Umlaufrichtung vorzugsweise durchgehend umlaufenden Randabschnitt 16 aufweisen, der mit den Materialverdickungen 7 in einer Wirkverbindung steht, so dass durch eine Kraftausübung auf den Randabschnitt 16 eine Kraftübertragung auf die Materialverdickungen 7 und darüber schließlich auf die Dichtlippen 4 möglich ist. Durch eine Kraftaufbringung, insbesondere einer Druckkraft, auf den Randabschnitt 16 kann somit die Schlitzöffnung 5 geschlossen und/oder geöffnet werden.

Die Erfindung betrifft also insbesondere ein Schnabelventil 1 zur Vermeidung eines Rückflusses eines Fluids, mit einem Grundkörper 2, der einen verformbaren Ausströmbereich 3 aufweist, in welchem eine durch wenigstens zwei Dichtlippen 4 ausgebildete Schlitzöffnung 5 ausgebildet ist, wobei in Schließstellung des Schnabelventils quer zu einer Erstreckungsrichtung 6 der Schlitzöffnung 5 eine Druckkraft auf wenigstens eine der Dichtlippen 4 aufgebracht ist.

### Bezugszeichenliste

- 1: Schnabelventil
- 2: Grundkörper
- 3: Ausströmbereich
- 4: Dichtlippe
- 5: Schlitzöffnung
- 6: Erstreckungsrichtung der Schlitzöffnung
- 7: Materialverdickung
- 8: Aufnahmeteil
- 9: Innenkontur des Aufnahmeraums
- 10: Aufnahmeraum 11 Außenkontur des Grundkörpers
- 12: Verstärkungsrippe
- 13: Innenseite; Zuströmseite 14 Außenseite; Abströmseite
- 15: Verengung
- 16: Randabschnitt

## Patentansprüche

1. Schnabelventil (1), insbesondere zur Vermeidung eines Rückflusses eines Fluids, mit einem wenigstens teilweise elastischen Grundkörper (2), der einen schnabelförmigen Ausströmbereich (3) aufweist, in welchem eine Schlitzöffnung (5) ausgebildet ist, wobei eine Offenstellung des Schnabelventils (1) durch eine Druckbeaufschlagung mit einer Flüssigkeit erfolgt und dabei das Fluid aus dem schnabelförmigen Ausströmbereich (3) heraus strömt, **dadurch gekennzeichnet, dass** das Schnabelventil (1) ein Aufnahmeteil (8) zur Aufnahme des Grundkörpers (2) aufweist, wobei eine Innenkontur eines Aufnahmeraums (10) des Aufnahmeteils (8) eine erste Form aufweist und eine Außenkontur (11) des Grundkörpers (2) eine von der ersten Form abweichende zweite Form aufweist, wobei der im Aufnahmeraum (10) eingesetzte Grundkörper (2) in Schließstellung im Aufnahmeraum (10) quer zu einer Erstreckungsrichtung (6) der Schlitzöffnung (5) wenigstens teilweise komprimiert ist.

2. Schnabelventil (1), nach Anspruch 1, **dadurch gekennzeichnet, dass** das Schnabelventil (1) wenigstens eine quer zur Erstreckungsrichtung (6) der Schlitzöffnung (5) verlaufende Materialverdickung (7) aufweist, die als wenigstens eine Verstärkungsrippe (12) ausgebildet ist und durchgängig von einer Außenkontur (11) des Grundkörpers (2) bis zu einem Rand der Schlitzöffnung (5) verläuft.

3. Schnabelventil (1) nach Anspruch 1 oder 2, **dadurch gekennzeichnet, dass** die Schlitzöffnung (5) im schnabelförmigen Ausströmbereich (3) durch wenigstens zwei Dichtlippen (4) ausgebildet ist.

4. Schnabelventil (1) nach Anspruch 3, **dadurch gekennzeichnet, dass** eine oder die Materialverdickung (7) an wenigstens einer der zwei Dichtlippen (4) oder an beiden Dichtlippen (4) ansetzt.

5. Schnabelventil (1) nach einem der vorstehenden Ansprüche, **dadurch gekennzeichnet, dass** in Schließstellung des Schnabelventils (1) ein Zusammendrücken der Dichtlippen (4) quer zur Erstreckungsrichtung (6) der Schlitzöffnung (5) erfolgt, insbesondere aufgrund der Deformation der zweiten Form beim Einsetzten in die erste Form, so dass sich die Dichtlippen (4) aneinander annähern oder so dass die Dichtlippen (4) aneinander anliegen.

6. Schnabelventil (1) nach einem der vorstehenden Ansprüche, **dadurch gekennzeichnet, dass** die wenigstens eine Materialverdickung (7) von einer Außenkontur (11) des Grundkörpers (2) bis zu einem Rand der Schlitzöffnung (5) verläuft.

7. Schnabelventil (1) nach einem der vorstehenden Ansprüche, **dadurch gekennzeichnet, dass** die wenigstens eine Materialverdickung (7) an einer Innenseite (13) und/oder an einer Außenseite (14) des Grundkörpers (2) ausgebildet ist.

8. Schnabelventil (1) nach einem der vorstehenden Ansprüche, **dadurch gekennzeichnet, dass** die wenigstens eine Materialverdickung (7) durchgängig von der Außenkontur (11) des Grundkörpers (2) bis zu wenigstens einer der Dichtlippen (4) verläuft.

9. Schnabelventil (1) nach einem der vorstehenden Ansprüche, **dadurch gekennzeichnet, dass** die erste Form der Innenkontur (9) des Aufnahmeraums (10) rund und die zweite Form der Außenkontur des Grundkörpers (2) unrund ausgebildet ist und/oder dass die erste Form der Innenkontur (9) des Aufnahmeraums (10) unrund und die zweite Form der Außenkontur (11) des Aufnahmeraums (10) rund ausgebildet ist, insbesondere wobei eine Abmessung der zweiten Form quer zur Erstreckungsrichtung (6) der Schlitzöffnung (5) größer als eine korrespondierende Abmessung der ersten Form gewählt ist.

10. Schnabelventil (1) nach einem der vorstehenden Ansprüche, **dadurch gekennzeichnet, dass** der Aufnahmeraum (10) ein durchgehendes Aufnahmeloch mit einer Verengung (15) aufweist, wobei der Grundkörper (2) im eingesetzten Zustand an der Verengung (15) gehalten ist.

11. Schnabelventil (1) nach einem der vorstehenden Ansprüche, **dadurch gekennzeichnet, dass** der Grundkörper (2) aus einem elastischen Material hergestellt ist und/oder dass ein oder das Aufnahmeteil (8) steif ist.

12. Schnabelventil (1) nach einem der vorstehenden Ansprüche, **dadurch gekennzeichnet, dass** am Grundkörper (2) wenigstens zwei Materialverdickungen (7) ausgebildet sind, welche jeweils quer zur Erstreckungsrichtung (6) der Schlitzöffnung (5) angeordnet sind, insbesondere auf gegenüberliegenden Seiten der Schlitzöffnung (5) und/oder an unterschiedlichen Dichtlippen (4) enden.

13. Schnabelventil (1) nach Anspruch 12, **dadurch gekennzeichnet, dass** die wenigstens zwei Materialverdickungen (7) jeweils von der Außenkontur (11) des Grundkörpers (2) jeweils bis an gegenüberliegende Ränder der Schlitzöffnung (5) verlaufen und/oder dass die wenigstens zwei Materialverdickungen (7) durch die Schlitzöffnung (5) voneinander getrennt sind, vorzugsweise wobei die Ränder der Schlitzöffnung (5) durch die zwei Dichtlippen (4) ausgebildet sind.

14. Schnabelventil (1) nach Anspruch 12 oder 13, **dadurch gekennzeichnet, dass** die wenigstens zwei Materialverdickungen (7) in Erstreckungsrichtung (6) der Schlitzöffnung (5) im gleichen Abstand zur Außenkontur (11) des Grundkörpers (2) angeordnet sind oder dass die wenigstens zwei Materialverdickungen (7) in Erstreckungsrichtung (6) der Schlitzöffnung (5) versetzt zueinander angeordnet sind.

15. Verwendung eines Schnabelventils (1) nach einem der vorstehenden Ansprüche, zur Vermeidung eines Rückflusses eines Fluids, **dadurch gekennzeichnet, dass** in Schließstellung des Schnabelventils (1) ein Zusammendrücken der Dichtlippen (4) quer zur Erstreckungsrichtung (6) der Schlitzöffnung (5) erfolgt.

## Claims

1. Duckbill valve (1), in particular for avoiding backflow of a fluid, having an at least partially elastic main body (2) which has a duckbill-shaped outflow region (3) in which a slit opening (5) is formed, wherein an open position of the duckbill valve (1) is realized by way of pressurization with a liquid and the fluid thereby flows out of the duckbill-shaped outflow region (3), **characterized in that** the duckbill valve (1) has a receiving part (8) for receiving the main body (2), wherein an inner contour of a receiving space (10) of the receiving part (8) has a first form and an outer contour (11) of the main body (2) has a second form, which differs from the first form, wherein, in the closed position, the main body (2), inserted in the receiving space (10), is at least partially compressed in the receiving space (10) transversely to an extent direction (6) of the slit opening (5).

2. Duckbill valve (1) according to Claim 1, **characterized in that** the duckbill valve (1) has at least one material thickening (7) extending transversely to the extent direction (6) of the slit opening (5), which material thickening is in the form of at least one reinforcement rib (12) and extends continuously from an outer contour (11) of the main body (2) as far as an edge of the slit opening (5).

3. Duckbill valve (1) according to Claim 1 or 2, **characterized in that** the slit opening (5) in the duckbill-shaped outflow region (3) is formed by at least two sealing lips (4).

4. Duckbill valve (1) according to Claim 3, **characterized in that** a or the material thickening (7) adjoins at least one of the two sealing lips (4) or both sealing lips (4).

5. Duckbill valve (1) according to one of the preceding claims, **characterized in that**, in the closed position of the duckbill valve (1), the sealing lips (4) are pressed together transversely to the extent direction (6) of the slit opening (5), in particular owing to the deformation of the second form during insertion into the first form, so that the sealing lips (4) approach one another or so that the sealing lips (4) bear against one another.

6. Duckbill valve (1) according to one of the preceding claims, **characterized in that** the at least one material thickening (7) extends from an outer contour (11) of the main body (2) as far as an edge of the slit opening (5).

7. Duckbill valve (1) according to one of the preceding claims, **characterized in that** the at least one material thickening (7) is formed on an inner side (13) and/or on an outer side (14) of the main body (2) .

8. Duckbill valve (1) according to one of the preceding claims, **characterized in that** the at least one material thickening (7) extends continuously from the outer contour (11) of the main body (2) as far as at least one of the sealing lips (4).

9. Duckbill valve (1) according to one of the preceding claims, **characterized in that** the first form of the inner contour (9) of the receiving space (10) is of round shape and the second form of the outer contour of the main body (2) is of non-round shape, and/or in that the first form of the inner contour (9) of the receiving space (10) is of non-round shape and the second form of the outer contour (11) of the receiving space (10) is of round shape, in particular wherein a dimension of the second form transverse to the extent direction (6) of the slit opening (5) is larger than a corresponding dimension of the first form.

10. Duckbill valve (1) according to one of the preceding claims, **characterized in that** the receiving space (10) has a continuous receiving hole with a constriction (15), wherein, in the inserted state, the main body (2) is held on the constriction (15).

11. Duckbill valve (1) according to one of the preceding claims, **characterized in that** the main body (2) is produced from an elastic material, and/or **in that** a or the receiving part (8) is stiff.

12. Duckbill valve (1) according to one of the preceding claims, **characterized in that** at least two material thickenings (7) are formed on the main body (2) and are in each case arranged transversely to the extent direction (6) of the slit opening (5), in particular end on opposite sides of the slit opening (5) and/or at different sealing lips (4).

13. Duckbill valve (1) according to Claim 12, **characterized in that** the at least two material thickenings (7) extend, in each case from the outer contour (11) of the main body (2), in each case as far as oppositely situated edges of the slit opening (5), and/or **in that** the at least two material thickenings (7) are separated from one another by the slit opening (5), preferably wherein the edges of the slit opening (5) are formed by the two sealing lips (4).

14. Duckbill valve (1) according to Claim 12 or 13, **characterized in that**, in the extent direction (6) of the slit opening (5), the at least two material thickenings (7) are arranged at the same distance from the outer contour (11) of the main body (2), or **in that**, in the extent direction (6) of the slit opening (5), the at least two material thickenings (7) are arranged offset from one another.

15. Use of a duckbill valve (1) according to one of the preceding claims for avoiding backflow of a fluid, **characterized in that**, in the closed position of the duckbill valve (1), the sealing lips (4) are pressed together transversely to the extent direction (6) of the slit opening (5).

## Revendications

1. Valve à bec de canard (1), en particulier pour éviter un reflux d'un fluide, avec un corps de base au moins partiellement élastique (2) qui comporte une zone d'éjection en forme de bec de canard (3) dans laquelle est formée une ouverture en fente (5), une position d'ouverture de la valve à bec de canard (1) étant provoquée par une application de pression avec un liquide et le fluide s'écoulant alors de la zone d'éjection en forme de bec de canard (3), **caractérisée en ce que** cette valve à bec de canard (1) présente un élément de réception (8) pour recevoir le corps de base (2), un contour intérieur d'un espace de réception (10) de l'élément de réception (8) présentant une première forme et un contour extérieur (11) du corps de base (2) présentant une deuxième forme différente de la première forme et, en position de fermeture, le corps de base (2) inséré dans l'espace de réception (10) étant au moins partiellement comprimé transversalement à une direction d'extension (6) de l'ouverture en fente (5).

2. Valve à bec de canard (1) selon la revendication 1, **caractérisée en ce que** cette valve à bec de canard (1) présente au moins une surépaisseur de matière (7) courant transversalement à la direction d'extension (6) de l'ouverture en fente (5) qui est configurée comme au moins une nervure de renforcement (12) et court en continu d'un contour extérieur (11) du corps de base (2) jusqu'à un bord de l'ouverture en fente (5).

3. Valve à bec de canard (1) selon la revendication 1 ou 2, **caractérisée en ce que** l'ouverture en fente (5) est formée dans la zone d'éjection en forme de bec de canard (3) par au moins deux lèvres d'étanchéité (4).

4. Valve à bec de canard (1) selon la revendication 3, **caractérisée en ce qu'**une ou la surépaisseur de matière (7) s'applique contre au moins une des deux lèvres d'étanchéité (4) ou contre les deux lèvres d'étanchéité (4).

5. Valve à bec de canard (1) selon une des revendications précédentes, **caractérisée en ce que**, lorsque cette valve à bec de canard (1) est en position de fermeture, une compression des lèvres d'étanchéité (4) se produit transversalement à la direction d'extension (6) de l'ouverture en fente (5), en particulier du fait de la déformation de la deuxième forme lors de l'insertion dans la première forme, de sorte que les lèvres d'étanchéité (4) se rapprochent l'une de l'autre ou de sorte que les lèvres d'étanchéité (4) sont appliquées l'une contre l'autre.

6. Valve à bec de canard (1) selon une des revendications précédentes, **caractérisée en ce que** l'au moins une surépaisseur de matière (7) court d'un contour extérieur (11) du corps de base (2) jusqu'à un bord de l'ouverture en fente (5).

7. Valve à bec de canard (1) selon une des revendications précédentes, **caractérisée en ce que** l'au moins une surépaisseur de matière (7) est formée sur une face intérieure (13) et/ou sur une face extérieure (14) du corps de base (2).

8. Valve à bec de canard (1) selon une des revendications précédentes, **caractérisée en ce que** l'au moins une surépaisseur de matière (7) court en continu du contour extérieur (11) du corps de base (2) jusqu'à au moins une des deux lèvres d'étanchéité (4).

9. Valve à bec de canard (1) selon une des revendications précédentes, **caractérisée en ce que** la première forme du contour intérieur (9) de l'espace de réception (10) est configurée de façon ronde et la deuxième forme du contour extérieur du corps de base (2) de façon non ronde et/ou que la première forme du contour intérieur (9) de l'espace de réception (10) est configurée de façon non ronde et la deuxième forme du contour extérieur (11) de l'espace de réception (10) de façon ronde, en particulier une dimension de la deuxième forme transversale à la direction d'extension (6) de l'ouverture en fente (5) étant choisie plus grande qu'une dimension correspondante de la première forme.

10. Valve à bec de canard (1) selon une des revendications précédentes, **caractérisée en ce que** l'espace de réception (10) comporte un trou de réception traversant avec un rétrécissement (15), le corps de base (2) étant maintenu au niveau du rétrécissement lorsqu'il est inséré.

11. Valve à bec de canard (1) selon une des revendications précédentes, **caractérisée en ce que** le corps de base (2) est fabriqué dans un matériau élastique et/ou qu'un ou l'élément de réception (8) est rigide.

12. Valve à bec de canard (1) selon une des revendications précédentes, **caractérisée en ce que** sur le corps de base (2) sont configurées au moins deux surépaisseurs de matière (7) qui sont disposées chacune transversalement à la direction d'extension (6) de l'ouverture en fente (5), en particulier sur des côtés opposés de l'ouverture en fente (5), et/ou se terminent sur des lèvres d'étanchéité (4) différentes.

13. Valve à bec de canard (1) selon la revendication 12, **caractérisée en ce que** les au moins deux surépaisseurs de matière (7) courent chacune du contour extérieur (11) du corps de base (2) jusqu'à des bords opposés de l'ouverture en fente (5) et/ou que les au moins deux surépaisseurs de matière sont séparées entre elles par l'ouverture en fente (5), les bords de l'ouverture en fente (5) étant formés de préférence par les deux lèvres d'étanchéité (4).

14. Valve à bec de canard (1) selon la revendication 12 ou 13, **caractérisée en ce que** les au moins deux surépaisseurs de matière (7) sont disposées dans la direction d'extension (6) de l'ouverture en fente (5) à la même distance du contour extérieur (11) du corps de base (2) ou que les au moins deux surépaisseurs de matière (7) sont disposées dans la direction d'extension (6) avec un décalage mutuel.

15. Utilisation d'une valve à bec de canard (1) selon une des revendications précédentes pour éviter un reflux d'un fluide, **caractérisée en ce que**, lorsque la valve à bec de canard (1) est en position de fermeture, une compression des lèvres d'étanchéité (4) se produit transversalement à la direction d'extension (6) de l'ouverture en fente (5).
